# EUROPEAN PATENT APPLICATION

(11) **EP 2 175 518 A1**
(43) Date of publication of application: **14.04.2010**
(21) Application number: 08165965.8
(22) Date of filing: 07.10.2008
(51) Int. Cl.: H01M 16/00

(54) **A rechargeable fuel cell system and a method for recharging a rechargeable fuel cell system**

(71) Applicant: Koninklijke Philips Electronics N.V., 5621 BA Eindhoven (NL)
(72) Inventor: The designation of the inventor has not yet been filed
(74) Representative: Damen, Daniel Martijn

(57) **Abstract**

A rechargeable fuel cell system (2) comprises a first electrochemical cell (4) to oxidize an alkali formate (20) and an alkali hydroxide (22) to an alkali carbonate (30) and water (32) and having an electrical output unit (50) for obtaining electrical energy produced thereby. The rechargeable fuel cell system (2) further comprises a second electrochemical cell (6) to reduce an alkali carbonate (30) and water (32) to an alkali formate (20), an alkali hydroxide (22) and oxygen (24) and having electrical input unit (52) for providing electrical energy thereto. The first and second electrochemical cells (4;6) are connected with each other for enabling a flow of fluids (8a;8b) between the cells. The rechargeable fuel cell system (2) according to the invention reduces in its reduction process (42) only fluids, specifically the alkali carbonate (30) and water (32). The reduction process is a fast chemical process, as the system does not need a gas as an input component in its reduction process (42).

## Description

### FIELD OF THE INVENTION

The invention relates to a rechargeable fuel cell system comprising a first electrochemical cell, used for oxidation and having an electrical output unit for delivering electrical energy, and a second electrochemical cell, used for reduction and having an electrical input unit for providing electrical energy to this second cell. These electrochemical cells are in a mutual fluid communication. The invention also relates to a method for recharging a rechargeable fuel cell system.

### BACKGROUND OF THE INVENTION

A rechargeable fuel cell system is disclosed in US patent 5928806 (herewith incorporated by reference). The known system comprises a first electrochemical cell and a second electrochemical cell. The first electrochemical cell is used to oxidize an oxygenated hydrocarbon to carbon dioxide and water, as shown by the following formula, and has electrical output means for producing electrical energy produced thereby.

CH₃OH+1.5O₂ = CO₂+2H₂O

The second electrochemical cell is used to reduce carbon dioxide and water to oxygenated hydrocarbon and oxygen, as shown by the following formula, and has electrical input means for providing electrical energy thereto.

CO₂+2H₂O = CH₃OH+1.5O₂

The first and second electrochemical cells are in fluid communication with each other, such that the carbon dioxide and water produced in the first cell are provided to the second cell and the oxygenated hydrocarbon and oxygen produced in the second cell are provided to the first cell.

US patent 5928806 discloses a method of reversibly interconverting oxygenated hydrocarbons and carbon dioxide by oxidizing an oxygenated hydrocarbon to carbon dioxide and water in a first zone, and reducing a mixture of carbon dioxide and water to an oxygenated hydrocarbon in a second zone. The two zones are in fluid communication with each other such that the products of the reactions in each zone are transferred to the other zone for use as reagents. The oxygenated hydrocarbon can be methyl alcohol, methyl formate, formaldehyde or formic acid. The reducing step consumes electrical energy, which is provided to the second zone from the off-peak production of a power plant. The off-peak energy is stored and can be recovered when needed by recovering the electrical energy produced in the first zone.

A drawback of the known system is the production of carbon dioxide gas during the oxidation. The carbon dioxide gas is used as an input component during the reduction. By oxidizing the hydrocarbon, the formed carbon dioxide gas has to be removed from the catalyst. This gas is blocking new transport of fuel to the same catalyst. Consequently the known system has a relatively slow kinetics, i.e. relatively slow chemical reactions take place in the system. When the carbon dioxide gas is removed to the regenerating part of the system the carbon dioxide gas has to be absorbed to the cathode to reduce into fuel again. Such absorption of the carbon dioxide gas, achieved with a gas - cathode contact, is also a relatively slow process.

Another drawback relating to cooling occurs in an upscaled version of the known system, when high capacity electrical power sources are required. Cooling of gas, in this particular example carbon dioxide, cannot be achieved in an effective way.

### SUMMARY OF THE INVENTION

It is an object of the present invention to provide a rechargeable fuel cell system in which chemical reaction rates are considerably higher than for known rechargeable fuel cell systems.

This object is achieved with the rechargeable fuel cell system according to the invention as defined in Claim 1. More particularly, the rechargeable fuel cell system according to the invention comprises a first electrochemical cell for oxidizing a fuel fluid comprising an alkali formate and an alkali hydroxide to an oxidized fluid comprising an alkali carbonate and water, which first electrochemical cell is provide with an electrical output unit for supplying electrical energy, and comprises a second electrochemical cell for regenerating, i.e. reducing, the oxidized fluid to the fuel fluid and oxygen , which second electrochemical cell is provided with an electrical input unit for receiving electrical energy, wherein said electrochemical cells are fluidically connected with each other.

With the term alkali is meant any one of the monovalent metals of group I (IUPAC style) of the periodic table comprising lithium (Li), sodium (Na), potassium (K), rubidium (Rb), caesium (Cs), and francium (Fr).

The rechargeable fuel cell system according to the invention comprises a first electrochemical cell and a second electrochemical cell. The first electrochemical cell is used to oxidize an alkali formate and an alkali hydroxide to an alkali carbonate and water, as shown by the following formula in which, as an example, Na is applied as an alkali metal:

2HCOONa+2NaOH+O₂ = 2NaCO₃+2H₂O

The first electrochemical cell has an electrical output unit for supplying electrical energy produced by oxidation. The second electrochemical cell is used to reduce the alkali carbonate and water to the alkali formate, the alkali hydroxide and oxygen, as shown by the following formula in which, as an example, Na is applied as an alkali metal:

2NaCO₃+2H₂O = 2HCOONa+2NaOH+O₂

If another alkali metal, Li, K, Rb, Cs or Fr, is used the oxidation and reduction processes can be expressed by formulas similar to the formulas shown above.

The second electrochemical cell has an electrical input unit for providing a certain potential to the anode/cathode thereto. The specific products formed during the reduction process depend on the cell potential applied. In order to get the fuel fluid from the oxidized fluid during reduction a certain potential is needed. Appling such potential is known in the art. The first and second electrochemical cells are in mutual fluid contact such that the alkali carbonate and water produced in the first electrochemical cell are provided to the second electrochemical cell, and the alkali formate, the alkali hydroxide and oxygen produced in the second electrochemical cell are provided to the first electrochemical cell. The rechargeable fuel cell system according to the invention reduces, in its reduction process, only fluids, viz. the alkali carbonate and water. Since the system does not have a gas in its reduction process it has a fast kinetics, i.e. it is a fast chemical process, and in that way overcomes the limitations, particularly the slow kinetics, of the prior art system described above. The second drawback of the prior art, cooling of an upscaled system, is also solved in the present invention. Specifically, the oxidized fluid involves liquids only, no gas. Cooling of a cell, only containing fluids, can be performed much more effective than cooling of a cell containing a gas product.

A preferred embodiment of the system according to the invention has the feature that sodium (Na) is applied as an alkali metal. Accordingly the alkali formate is sodium formate, the alkali hydroxide is sodium hydroxide and the alkali carbonate is sodium carbonate. The oxidation process is shown by the following formula:

2HCOONa+2NaOH+O₂ = 2NaCO₃+2H₂O

The reduction process is shown by the following formula:

2NaCO₃+2H₂O = 2HCOONa+2NaOH+O₂

A preferred embodiment of the system according to the invention has the feature that potassium (K) is applied as an alkali metal. Accordingly the alkali formate is potassium formate, the alkali hydroxide is potassium hydroxide and the alkali carbonate is potassium carbonate. The oxidation process is shown by the following formula:

2HCOOK+2KOH+O₂ = 2KCO₃+2H₂O

The reduction process is shown by the following formula:

2KCO₃+2H₂O = 2HCOOK+2KOH+O₂

A preferred embodiment of the system according to the invention has the feature that it is a closed cycling system. Such closed cycling system keeps the total volume of the fuel fluid and oxidized fluid together unchanged. During the oxidation process the fuel fluid is oxidized to the oxidized fluid and during the reduction process this oxidized fluid is reduced again to the fuel fluid. Neither fuel fluid nor oxidized fluid leaves the system. The fuel fluid and the oxidized fluid convert to each other during the oxidation and reduction processes and in that way they cycle within the closed cycle system.

A preferred embodiment of the system according to the invention has the feature that the electrical input unit comprises a solar cell. Such system uses solar energy for the reduction process and in this way does not consume expensive external electrical energy. During electrical energy demand the electrical power is delivered by the oxidation process. When less or no power is needed the fuel fluid can be regenerated in the reduction process supported with the solar cell as the electrical input unit.

It is a further object of the present invention to provide an efficient method for recharging a rechargeable fuel cell system.

This object is achieved with the method according to the invention as defined in Claim 6. Particularly, the method according to the invention is a method for recharging a rechargeable fuel cell system, wherein use is made of a fuel fluid comprising an alkali formate and an alkali hydroxide, a first electrochemical cell and a second electrochemical cell, which method comprises the following steps:
oxidizing the fuel fluid in the first electrochemical cell to an oxidized fluid comprising an alkali carbonate and water, wherein energy is produced,
conveying the oxidized fluid from the first electrochemical cell to the second electrochemical cell,
reducing, i.e. regenerating, the oxidized fluid in the second electrochemical cell to the fuel fluid, wherein energy is consumed, and
conveying the fuel fluid from the second electrochemical cell to the first electrochemical cell.

As already described, the method according to the invention for recharging a rechargeable fuel cell system does not have a gas in its reduction process and accordingly allows a fast chemical process. Energy produced during oxidizing the fuel fluid to the oxidized fluid is supplied to the electrical output unit. Energy consumed during regenerating the oxidized fluid to the fuel fluid is provided by the electrical input unit.

A preferred embodiment of the method for recharging a rechargeable fuel cell system according to the invention has the feature that sodium (Na) is applied as an alkali metal.

Another preferred embodiment of the method for recharging a rechargeable fuel cell system according to the invention has the feature that potassium (K) is applied as an alkali metal.

In a practical embodiment of the method according to the invention the produced energy is supplied by the first electrochemical cell in the form of electrical energy.

In another practical embodiment the consumed energy is delivered to the second electrochemical cell in the form of electrical energy.

### BRIEF DESCRIPTION OF THE DRAWINGS

In the following, the invention and further aspects will be described, by way of example, and explained hereinafter, using the following figures:
Fig. 1 schematically shows an exemplary embodiment of the rechargeable fuel cell system according to the invention; and
Fig. 2 schematically shows a method for recharging a rechargeable fuel cell system according to the invention.

### DETAILED DESCRIPTION OF THE EMBODIMENTS

In the following description of the preferred embodiments, reference is made to the accompanying drawings which form a part thereof. Specific embodiments, in which the invention may be practiced, are shown in the following description by way of illustration. It is also understood that other embodiments may be utilized and structural changes may be made without departing from the scope of the present invention. It is noted that the same reference signs will be used for indicating the same or similar parts in the several embodiments.

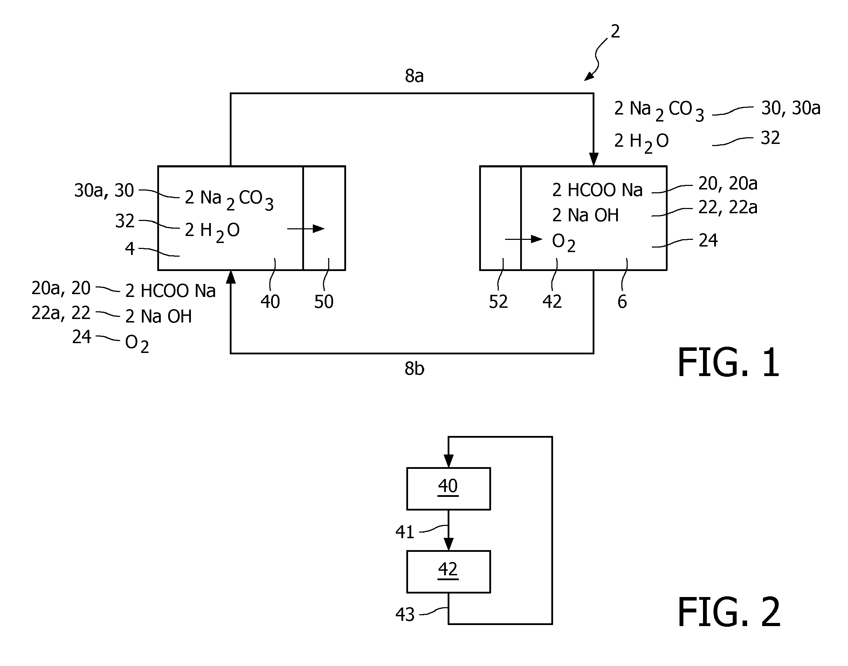

A preferred embodiment of the fuel cell system according to the invention is schematically shown in Fig. 1. A rechargeable fuel cell system 2 comprises a first electrochemical cell 4 to oxidize a sodium formate 20a and a sodium hydroxide 22a to a sodium carbonate 30a and water 32. The first electrochemical cell 4 has an electrical output unit 50 for supplying electrical energy produced thereby. The rechargeable fuel cell system 2 further comprises a second electrochemical cell 6 to reduce the sodium carbonate 30a and water 32 to the sodium formate 20a, the sodium hydroxide 22a and oxygen 24. The second electrochemical cell 6 has an electrical input unit 52 for providing electrical energy thereto. The first and second electrochemical cells 4;6 are connected with each other enabling a flow of fluids 8a;8b between the cells.

The oxidation process 40 is defined by the following formula:

2HCOONa+2NaOH+O₂ = 2NaCO₃+2H₂O

During the oxidation process 40 electrical energy is produced, wherein an electrical output unit 50 is used for supplying electrical energy storage. Such electrical output input 50 can be any suitable unit to receive electrical energy; such units are known in the art.

The reduction process 42 is defined by the following formula:

2NaCO₃+2H₂O = 2HCOONa+2NaOH+O₂

Electrical energy is needed for the reduction process 42. An electrical input unit 52 provides this electrical energy. Such electrical input unit 52 can be any suitable unit, known in the art, to deliver electrical energy. Such electrical input unit 52 comprises an anode and a cathode. Anode and cathode materials are also know in the art; for example the anode can be a platinum anode and the cathode can be a molybdenum cathode. Other suitable cathode materials are e.g. mentioned in said US patent 5928806. The specific products formed during the reduction process 42 depend on the cell potential applied. In order to get the fuel fluid during reduction a certain potential is needed. Appling such potential is known in the art. The potential needed to reduce the sodium carbonate 30a and water 32 to the sodium formate 20a, the sodium hydroxide 22a and oxygen 24 is chosen from the range -1.2 to -2.7 V versus the saturated calomel electrode (SCE). In case of large overvoltage, cathode materials should be chosen to minimize the rate of hydrogen production. The first and second electrochemical cells 4;6 are in fluid communication with each other, such that the sodium formate 20a and the sodium hydroxide 22a and oxygen 24 produced in the second electrochemical cell 6 are provided to the first electrochemical cell 4, and the sodium carbonate 30a and water 32 produced in the first electrochemical cell 4 are provided to the second electrochemical cell 6. The rechargeable fuel cell system 2 according to the invention, in its reduction process 42, reduces only fluids, specifically the sodium carbonate 30a and water 32. Since the system does not have a gas as an input component in its reduction process 42, the reduction process is a fast chemical process. Another advantage of having the reduction process 42 with fluids only, is cooling of an upscale system which will be used when more electrical energy should be produced. Cooling of the second electrochemical cell 6 containing fluids only is much more effective than cooling of a cell containing one or more gas products.

Preferably, the system according to the invention is a closed cycling system. Such a closed cycling system keeps the total volume of the fuel fluid and oxidized fluid together unchanged. During the oxidizing process 40 the fuel fluid is oxidized to the oxidized fluid and during the reduction process 42 this oxidized fluid is reduced again to the fuel fluid. Neither fuel fluid nor oxidized fluid leaves the system. The fuel fluid and the oxidized fluid convert to each other during the oxidation process 40 and reduction process 42 and in this way they cycle within the closed cycle system 2.

Preferably, the electrical input unit 52 is a solar cell. Such a system 2 uses solar energy for the reduction process 42 and in this way does not consume expensive external electrical energy. During electrical energy usage the electrical power is delivered by the oxidation process 40 and in times of no energy demand the sodium carbonate 30a can be regenerated by the reduction process 42, supported with the solar cell as the electrical input unit 52.

Fig. 2 schematically shows a preferred embodiment of the method for recharging a rechargeable fuel cell system 2 according to the invention, wherein use is made of a fuel fluid comprising sodium formate 20a and sodium hydroxide 22a, a first electrochemical cell 4 and a second electrochemical cell 6, which method comprises the following steps:
oxidizing 40 the fuel fluid in the first electrochemical cell 4 to an oxidized fluid comprising sodium carbonate 30a and water, wherein energy is produced,
conveying 41 the oxidized fluid from the first electrochemical cell 4 to the second electrochemical cell 6,
reducing 42, i.e. regenerating, the oxidized fluid in the second electrochemical cell 6 to the fuel fluid, wherein energy is consumed, and
conveying 43 the fuel fluid from the second electrochemical cell 6 to the first electrochemical cell 4.

As already described, the method for recharging a rechargeable fuel cell system does not use a gas in its reduction process 42 and accordingly it is a fast process. Energy produced during oxidizing the fuel fluid to the oxidized fluid is supplied to the electrical output unit 50. Energy consumed during regenerating the oxidized fluid to the fuel fluid is provided by the electrical input unit 52.

In practice, it is preferred to deliver the consumed energy to the second electrochemical cell 6 in the form of electrical energy.

While the invention has been illustrated and described in detail in the drawings and foregoing description, such illustration and description are to be considered illustrative or exemplary and not restrictive; the invention is not limited to the disclosed embodiments, more particularly it is noted that other alkali metals can be used successfully.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. A single controlling means or other unit may fulfill the functions of several items recited in the claims. The mere fact that certain measures are recited in mutually different dependent claims does not indicate that a combination of these measured cannot be used to advantage. Any reference signs in the claims should not be construed as limiting the scope.

### LIST OF REFERENCE NUMERALS:

- 2: Rechargeable fuel cell system
- 4: First electrochemical cell
- 6: Second electrochemical cell
- 8a;8b: Flow of fluids
- 20: Alkali formate
- 20a: Sodium formate
- 22: Alkali hydroxide
- 22a: Sodium hydroxide
- 24: Oxygen
- 30: Alkali carbonate
- 30a: Sodium carbonate
- 32: Water
- 40: Oxidation
- 41: Conveying the oxidized fluid
- 42: Reduction
- 43: Conveying the fuel fluid
- 50: Electrical output unit
- 52: Electrical input unit

## Claims

1. A rechargeable fuel cell system (2) comprising:
a first electrochemical cell (4) for oxidizing a fuel fluid comprising an alkali formate (20) and an alkali hydroxide (22) to an oxidized fluid comprising an alkali carbonate (30) and water (32), which first electrochemical cell is provided with an electrical output unit (50) for supplying electrical energy, and
a second electrochemical cell (6) for regenerating the oxidized fluid to the fuel fluid and oxygen (24), which second electrochemical cell is provided with an electrical input unit (52) for receiving electrical energy,
wherein said electrochemical cells (4;6) are fluidically connected with each other.

2. The rechargeable fuel cell system (2) as claimed in claim 1, wherein the alkali formate (20) is sodium formate, the alkali hydroxide (22) is sodium hydroxide and the alkali carbonate (30) is sodium carbonate.

3. The rechargeable fuel cell system (2) as claimed in claim 1, wherein the alkali formate (20) is potassium formate, the alkali hydroxide (22) is potassium hydroxide and the alkali carbonate (30) is potassium carbonate.

4. The rechargeable fuel cell system (2) as claimed in claim 1, 2 or 3 provided with a closed cycling system.

5. The rechargeable fuel cell system (2) as claimed in claim 1, 2 or 3, wherein the electrical input unit (52) comprises a solar cell unit.

6. A method for recharging a rechargeable fuel cell system (2), wherein use is made of a fuel fluid comprising an alkali formate (20) and an alkali hydroxide (22), a first electrochemical cell (4) and a second electrochemical cell (6), which method comprises the following steps:
oxidizing the fuel fluid in the first electrochemical cell (4) to an oxidized fluid comprising an alkali carbonate (30) and water (32), wherein energy is produced,
conveying the oxidized fluid (41) from the first electrochemical cell (4) to the second electrochemical cell (6),
reducing the oxidized fluid in the second electrochemical cell (6) to the fuel fluid, wherein energy is consumed, and
conveying the fuel fluid (43) from the second electrochemical cell (6) to the first electrochemical cell (4).

7. The method for recharging a rechargeable fuel cell system (2) as claimed in claim 6, wherein the alkali formate (20) is sodium formate, the alkali hydroxide (22) is sodium hydroxide and the alkali carbonate (30) is sodium carbonate.

8. The method for recharging a rechargeable fuel cell system (2) as claimed in claim 6, wherein the alkali formate (20) is potassium formate, the alkali hydroxide (22) is potassium hydroxide and the alkali carbonate (30) is potassium carbonate.

9. The method for recharging a rechargeable fuel cell system (2) as claimed in claim 6, 7 or 8, wherein the produced energy is supplied by the first electrochemical cell (4) in the form of electrical energy.

10. The method for recharging a rechargeable fuel cell system (2) as claimed in claim 6, 7 or 8, wherein the consumed energy is delivered to the second electrochemical cell (6) in the form of electrical energy.
